# EUROPEAN PATENT APPLICATION

(11) **EP 1 659 224 A1**
(43) Date of publication of application: **24.05.2006**
(21) Application number: 05256895.3
(22) Date of filing: 08.11.2005
(51) Int. Cl.: E02D 31/00, E02D 17/20, E02B 3/12, G01M 3/40, G01N 27/20, B32B 27/06, B32B 27/32, C09C 1/48

(54) **Geomembrane**

(30) Priority: 17.11.2004 GB 0425319
(71) Applicant: DRC Polymer Products Limited, 1 Regal Drive - Soham Cambridgeshire, CB7 5BA (GB)
(72) Inventor: Bray, Kenneth Anthony, Soham Ely Cambridgeshire, CB7 4FW (GB); May, Christopher John, Stevenage Hertfordshire, SG2 7QQ (GB); Grknic, Milivoy Peter, Hemel Hempstead Hertfordshire HP2 7QW (GB)
(74) Representative: Whitaker, Iain Mark

(57) **Abstract**

The present invention concerns geomembranes, being impermeable sheets of polymer that are used in contact with soil or rock as part of civil engineering operations to act as a barrier to passage of water and water -borne contaminants. The invention provides a new geomembrane where the geomembane layer is laminated together with a sub-layer, the sub-layer being adapted to be electrically conductive whereby integrity of the geomembrane may be monitored electrically.

## Description

### Field of the Invention

The present invention concerns improvements in and relating to geomembranes, being impermeable sheets of polymer that are used in contact with soil or rock as part of civil engineering operations to act as a barrier to passage of water and water -borne contaminants. The invention more specifically relates to geomembranes suitable for use in providing a barrier layer to cover concrete capped water reservoirs. The invention provides a new geomembrane arrangement, a new installation incorporating such a geomembrane and a new method and system for monitoring geomembrane integrity.

### Background to the Invention

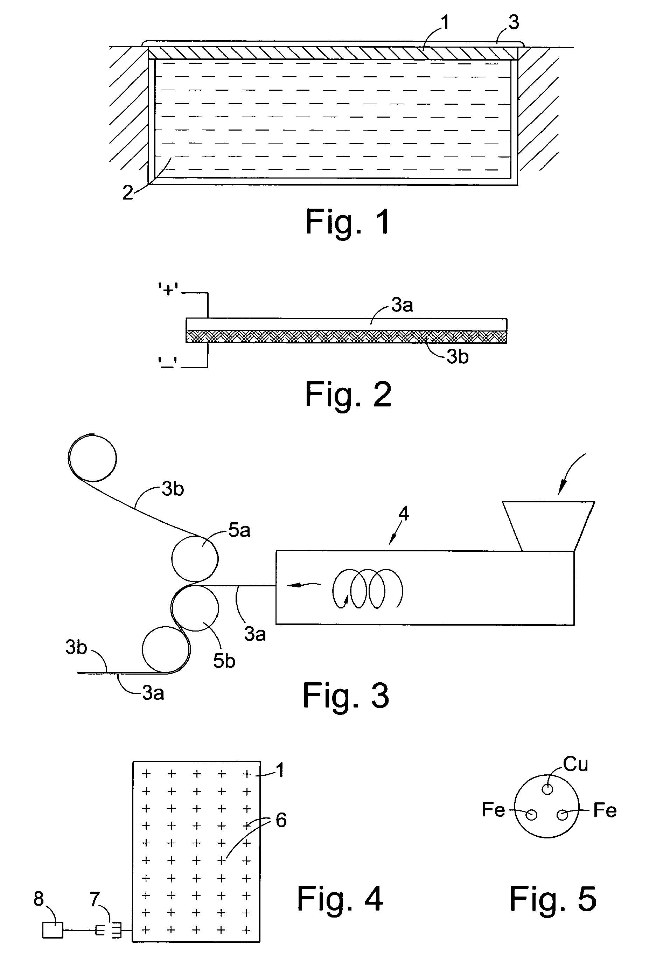

Geomembranes are used widely in civil engineering projects but are most heavily used to line landfill sites to prevent passage of contaminants in the landfill site through to the ground water. Generally geomembranes are of PVC or high density polyethylene or other polyolefin. In the context of the water industry, geomembranes are used to provide an impermeable barrier for containment of water reservoirs and are used also on concrete capped reservoirs to prevent seepage of contaminated water through the concrete cap of the reservoir. An example of the latter type of installation is illustrated in Figure 1 below.

Whatever the end application of the geomembrane it is generally practically important to have some means for monitoring the integrity of the membrane over the passage of time. To that end integrity testing systems such as disclosed in US-4543525 have been developed. Geomembranes are generally electrically insulating, thus in US-4543525 there is described a method and apparatus for determining a leak in a pond liner of electrically insulating sheet material and which involves applying one electrode from an AC or DC power supply to the water contained by the membrane and the other electrode from the power supply being inserted in the ground. A galvanometer is electrically connected to detector probes with the probes being in contact with the membrane at a spacing from each other whereby any breach in the membrane between the probes will affect the reading on the galvanometer. For the purposes of monitoring the integrity of a geomembrane lining a pool, the use of this arrangement of detector is adequate. However, the use of this approach for monitoring the integrity of a geomembrane used to act as a barrier above a concrete cap of a capped reservoir is more problematic.

Concrete is a far less effective conductor of electricity than soil in part because it will generally have a much lower moisture content than soil. Accordingly, the use of a conductivity device to test for integrity of a geomembrane laid above concrete has much lower sensitivity and greater vulnerability to errors than when used for testing pond liners resting on soil. Even where the concrete is reinforced with steel rods, exploiting the conductivity of the rods to monitor integrity of the membrane is very unreliable.

It is, accordingly, a general objective of the present invention to provide a more reliable system for integrity testing geomembranes as used over concrete such as over concrete-capped reservoirs, despite the low conductivity of concrete.

### Summary of the Invention

According to a first aspect of the present invention, there is provided a geomembrane laminated together with a sub-layer, the sub-layer being adapted to be electrically conductive whereby integrity of the geomembrane may be monitored electrically.

The sub-layer is preferably a geotextile layer to protect the geomembrane from any rocks or sharp contours of the substrate (concrete) on which the laminate is overlaid.

Whereas electrically conductive geotextiles in sheet form exist already and whereas they might be used directly with geomembranes, it is a critical requirement that the geomembrane be laminated to the electrically conductive layer in order for reliable integrity testing to be carried out using electrical conductivity testing devices. For the first time the present invention provides a geomembrane, intimately bonded to a layer of electrically conductive geotextile as a laminate.

The electrically conductive geotextile is generally formed of fibres and has the nature of a fleece. It may be woven or non-woven and have characteristics of a spun, wire formed or needle punched material from fibres, generally being a synthetic material which, unlike the geomembrane, is not extruded and heated in final manufacture, and is generally permeable to water. Preferred materials for the geotextile are polypropylene and polyethylene fibres, though polyesters and polyamides are also commonly used in geotextiles and may suit the purpose. Preferably, the geotextile is rendered electrically conductive throughout by coating with carbon black. In one embodiment carbon black in powder form may be applied to the polymer fibres in a latex bath and which is suitably heated to a temperature of the order of about 20-30°C.

The geomembrane is suitably a polyolefin such as flexible polypropylene alloy or an EP rubber and particularly preferably is a flexible polypropylene alloy known as Hylam (®) FPA.

The geomembrane layer suitably is between 0.75 and 5mm in thickness and the electrically conductive geotextile layer suitably is of the order of 100-500 g/m².

The geomembrane layer and the electrically conductive geotextile layer are preferably bonded together in substantially immediate downstream processing of the geomembrane as it exits from a heated extruder. The process of manufacture of the laminate is particularly preferably a horizontal hot die extrusion process where the extrusion is at an elevated temperature and pressure. This contrasts with the hot blown film formation process used generally for manufacture of geomembranes in the art.

In a particularly preferred further development of the invention, the laminate is further modified to incorporate one or more sensors for electrical conductivity sensing of the integrity of the geomembrane layer. The sensors are suitably on or in the upper surface of the geomembrane but may be provided on the lower surface or even associated with the sub-layer. A matrix of spaced apart sensors is suitably provided. A monitoring device that might, for example, comprise a meter or display or an alarm may be integrally coupled or assembled to the laminate to continuously monitor the condition sensed by the sensors. Alternatively, the sensors may be linked to an output terminal of the laminate to which a readout device may be coupled, so as to be read at intervals by a visiting service engineer equipped with the readout device.

### Brief Description of the Drawings

A preferred embodiment of the present invention will now be more particularly described, by way of example, with reference to the accompanying drawings, wherein:
Figure 1 is a simplified schematic diagram of a reservoir capped with a concrete layer and overlaid with a geomembrane;
Figure 2 is a sectional view through a geomembrane laminate of the preferred embodiment of the present invention;
Figure 3 is a simplified schematic diagram of a production plant performing the laminate;
Figure 4 is a schematic plan view of a laminate incorporating embedded sensors; and
Figure 5 is a transverse sectional view through a sensor of the Figure 4 laminate.

### Description of the Preferred Embodiment

The concrete-capped reservoir illustrated in Figure 1 has a concrete cap 1 as a roof over the body of water 2 contained within the reservoir and this concrete cap 1 further has a barrier layer of geomembrane 3 laid over the concrete cap to act as an impermeable barrier preventing ingress of potentially contaminated waters into the reservoir from above. As in a conventional installation the geomembrane 3 is a monolayer of a material such as polyethylene or polypropylene which has been extruded under heat and pressure as a sheet and which provides an impermeable barrier to water whilst the sheet remains intact. However, as noted above, for various reasons the integrity of the geomembrane 3 may be compromised in use over time and it is important to be able to monitor the membrane's integrity so that remedial action may be taken if the integrity has been compromised.

Referring to Figure 2, the preferred embodiment of the present invention comprises a laminate of a substantially conventional geomebrane sheet 3a and which may suitably be a commercially available sheet, for example a flexibly polypropylene alloy sheet known as HYLAM ® FPA manufactured by DRC Polymer Products Limited. This sheet of polypropylene 3a is intimately laminated to an underlying layer of geotextile 3b. Whereas the geomembrane layer 3a is a sheet of impermeable polymer that has been extruded and heated in final manufacture such that it is impermeable and does not have a fibrous nature, the geotextile layer is formed to be fibrous/fleece-like in nature whereby it is better able to conform to underlying substrate surfaces such as the surface of the concrete cap 1. Furthermore, whereas the geomembrane 3a, by its nature, is inherently electrically insulating, the geotextile layer 3b is adapted to be electrically conductive and to this end in the preferred embodiment is uniformly coated throughout with carbon black. Whereas the geotextile layer 3b need not necessarily be water permeable, it preferably is but is sufficiently fibrous to provide a soft underlay for the impermeable geomembrane to minimise the risk of tears to the geomembrane from rocks or sharp contours of the concrete substrate 1.

The geotextile layer 3b is suitably uniformly coated with carbon black by immersing it in a latex bath, throughout which carbon black powder has been dispersed, and maintaining the bath at a temperature of 20-30°C whilst the latex bonds to the layer.

Referring to Figure 3, a particularly effective manufacturing process for the making of the laminate of the present invention uses a horizontal hot dye extrusion plant 4 from which the geomembrane 3a is extruded under heat and pressure suitably at a temperature of the order of 200°C and is then pressed into intimate contact with a sheet of geotextile 3b to bond with and thereby laminate with the geotextile 3b. The geomembrane 3a is pressed against the geotextile layer 3b between two co-acting rollers, 5a, 5b of a laminating press and where the press rollers 5a, 5b are maintained at a temperature of the order of 80°C to efficiently bond the two layers 3a, 3b together.

The geomembrane laminate as formed by this process may be used in the installation shown in Figure 1 and suitably is supplied in a roll that may be rolled out flat over the concrete and which avoids the need for any separate underlay to be put down first. It may be monitored for integrity by using the testing apparatus of US-4543525, for example. In the present case, rather than applying the first contact from the power supply to the ground or concrete, it would instead be applied to the electrically conductive sub-layer 3b of geotextile.

In a refined embodiment of the invention illustrated in Figure 4, instead of leaving the operator to scan the entire area of the geomembrane 3a manually with a portable galvanometer and sensor probes, the laminate is pre-assembled with sensor probes mounted to or embedded into the upper surface of the geomembrane layer 3a. A matrix of many sensor probes 6 is schematically illustrated in the laminate shown in Figure 4 and these are wired through the geomembrane to a perimeter of the geomembrane at which a sensor reader is mounted or having an output socket 7 to couple to a sensor reader 8. Each sensor probe 6 suitably has a form as illustrated in Figure 4, comprising a length of heavily carbon loaded polyethylene rod through which runs an array of wires - illustrated as three wires, one of which is of copper and the others of which are of iron. Suitably the probes are collected together at the output point 7 and can be read independently of each other or in selected combinations whereby a leakage may be pinpointed without need to manually traverse the whole area of the membrane. Conversely, the matrix of sensors 6 could be collected together and read as a whole as a means of determining simply when the membrane has been compromised.

In the preferred embodiment, the laminate with embedded sensor array is simply incorporated with a collective output that may be interrogated by a separate readout device 8 that couples to the output 7 so that a service engineer equipped with the readout device may visit the installation at service intervals. Alternatively the output may have an integral alarm device or readout device of its own.

## Claims

1. A geomembrane laminated together with a sub-layer, the sub-layer being adapted to be electrically conductive whereby integrity of the geomembrane may be monitored electrically.

2. A geomembrane as claimed in Claim 1, wherein the sub-layer is a geotextile layer.

3. A geomembrane as claimed in Claim 1 or 2, wherein the sub-layer is electrically conductive throughout by having a coating of carbon black.

4. A geomembrane as claimed in any preceding claim, wherein the geomembrane is a flexible polypropylene alloy or an EP rubber.

5. A geomembrane as claimed in any preceding claim, wherein the geomembrane layer is between 0.75 and 5mm in thickness and the electrically conductive sub-layer is of the order of 100-500 g/m².

6. A geomembrane as claimed in any preceding claim, wherein the geomembrane layer and the electrically conductive sub-layer are bonded together from substantially immediate downstream processing of the geomembrane as it exits from a heated extruder.

7. A geomembrane as claimed in any preceding claim, wherein the geomembrane is formed from a horizontal hot die extrusion process where the extrusion is at an elevated temperature and pressure.

8. A geomembrane as claimed in any preceding claim, wherein the laminate is further modified to incorporate one or more sensors embedded into it for electrical conductivity sensing of the integrity of the geomembrane layer.

9. A geomembrane as claimed in Claim 8, wherein a matrix of spaced apart sensors is provided.

10. A geomembrane as claimed in Claim 8 or 9, wherein a monitoring device such as, for example, a meter or display or an alarm is integrally coupled or assembled to the laminate to continuously monitor the condition sensed by the sensors.

11. A geomembrane as claimed in Claim 10, wherein the sensors are linked to an output terminal of the laminate to which a readout device may be coupled, so as to be read at intervals by a visiting service engineer equipped with the readout device.
